# EUROPÄISCHE PATENTSCHRIFT

(11) **EP 3 626 514 B1**
(45) Veröffentlichungstag und Bekanntmachung des Hinweises auf die Patenterteilung: **07.07.2021**
(21) Anmeldenummer: 19197325.4
(22) Anmeldetag: 13.09.2019
(51) Int. Cl.: B60L 53/30, B60L 53/66

(54) **LADESTATION**
CHARGING STATION
STATION DE RECHARGE

(30) Priorität: 20.09.2018 DE 102018123129
(43) Veröffentlichungstag der Anmeldung: 25.03.2020
(73) Patentinhaber: Innogy SE, 45128 Essen (DE)
(72) Erfinder: Dembek, Florian, 45701 Herten (DE); Vogel, Gerald, 44229 Dortmund (DE)
(74) Vertreter: Hohendorf Kierdorf Patentanwälte PartGmbB

(56) Entgegenhaltungen:
- EP-A1- 2 861 451
- WO-A1-2018/081321
- US-A1- 2012 191 242

## Beschreibung

Die Anmeldung betrifft eine Ladestation zum Laden von Elektrofahrzeugen, umfassend mindestens einen ersten Ladepunkt, eingerichtet zum Abgeben von elektrischer Leistung, wobei dem ersten Ladepunkt eine erste Ladepunktkennung zugeordnet ist. Darüber hinaus betrifft die Ladestation ein System, insbesondere Ladesystem, ein Verfahren zum Betreiben einer Ladestation und eine Ladeanwendung.

Elektrische Ladestationen zum Laden von Elektrofahrzeugen sind bekannt, beispielsweise aus den Dokumenten WO 2018/081321 A1, US 2012/191242 A1 und EP 2 861451 A1.

Unter einem Elektrofahrzeug ist vorliegend ein Fahrzeug zu verstehen, das zumindest teilweise elektrisch betrieben werden kann und mindestens einen wiederaufladbaren elektrischen Speicher umfasst.

Eine elektrische Ladestation weist mindestens einen Ladepunkt auf. Zum Austauschen von elektrischer Energie bzw. Leistung kann ein Elektrofahrzeug bzw. dessen elektrischer Speicher über ein Ladekabel mit dem Ladepunkt verbunden werden/sein. Beispielsweise umfasst der Ladepunkt ein fest angeschlagenes Ladekabel mit einem Ladestecker oder eine Ladesteckeraufnahme, beispielsweise in Form einer Ladesteckerbuchse. Der Ladestecker eines Ladekabels kann vorzugsweise ein Ladestecker Typ 2 nach der Norm IEC 62196-2 sein. Es versteht sich, dass auch andere Ladeanschlüsse eingesetzt werden können.

Bevor ein Ladeprozess bzw. -vorgang durch die Ladestation freigegeben wird, wird in der Regel ein Authentifizierungsprozess durchgeführt. Hierbei ist es aus dem Stand der Technik bekannt, dass ein Nutzer diesen Authentifizierungsprozess unter Nutzung seines mobilen Nutzerendgeräts initiiert. Insbesondere kann auf dem mobilen Nutzerendgerät eine Ladeanwendung (auch "Ladeapp" genannt) installiert sein.

Zunächst muss die Ladepunktkennung des freizuschaltenden Ladepunkts in der Ladeanwendung angegeben werden. Dies kann durch eine manuelle Eingabe des Nutzers erfolgen. Um die Nutzerfreundlichkeit zu verbessern, sind aus dem Stand der Technik auch Systeme bekannt, bei denen an der Ladestation ein sichtbarer QR-Code angezeigt wird, der von dem mobilen Nutzerendgerät eingescannt werden kann.

Nachdem der Ladeanwendung die Ladepunktkennung bekannt ist, initiiert diese den Authentifizierungsprozess, beispielsweise durch Starten einer Kommunikation mit einem Hintergrundsystems. Ist das Ergebnis des Authentifizierungsprozesses positiv, wird der Ladepunkt freigegeben und elektrische Energie kann zwischen dem Elektrofahrzeug und dem Ladepunkt ausgetauscht werden.

Nachteilig hieran ist jedoch die mit einem hohen Aufwand verbundene Erfassung der Ladepunktkennung durch das mobile Nutzerendgerät. So muss der Nutzer die Ladepunktkennung des Ladepunkts manuell eingeben oder manuell einscannen, beispielsweise mittels einer Kamera des mobilen Nutzerendgeräts.

Der vorliegenden Anmeldung liegt daher die Aufgabe zugrunde, eine Ladestation zum Laden von Elektrofahrzeugen bereitzustellen, welche in einfacher und insbesondere in nutzerfreundlicher Weise betrieben werden kann.

Die Aufgabe wird gemäß einem ersten Aspekt der Anmeldung gelöst durch eine Ladestation zum Laden von Elektrofahrzeugen gemäß Anspruch 1. Die Ladestation umfasst mindestens einen ersten Ladepunkt, eingerichtet zum Abgeben von elektrischer Leistung. Dem ersten Ladepunkt ist eine erste Ladepunktkennung zugeordnet. Die Ladestation umfasst mindestens ein erstes Nahfeld-Sendemodul, eingerichtet zum Aussenden eines ersten zumindest die erste Ladepunktkennung enthaltenden Identifikationssignals.

Indem im Gegensatz zum Stand der Technik anmeldungsgemäß die Ladestation über mindestens ein Nahfeld-Sendemodul verfügt, welches im Betrieb der Ladestation ein Identifikationssignal aussendet, welches die Ladepunktkennung eines Ladepunkts der Ladestation enthält, wird die Ladestation in einfacher und insbesondere in nutzerfreundlicher Weise betrieben. Die Ladepunktkennung des freizuschaltenden Ladepunkts kann mit einem geringen Aufwand durch das mobile Nutzerendgerät erfasst werden. Insbesondere ist keine manuelle Eingabe oder manuelles Einscannen durch den Nutzer erforderlich.

Die anmeldungsgemäße Ladestation umfasst mindestens einen Ladepunkt, eingerichtet zum Abgeben von elektrischer Leistung. Vorzugsweise kann der Ladepunkt auch zur Aufnahme von elektrischer Leistung eingerichtet sein. Der Ladepunkt kann insbesondere eine elektrische Schnittstelle sein oder umfassen, beispielsweise in Form eines fest angeschlagenen Ladekabels mit einem Ladeanschluss (z.B. Ladestecker) und/oder in Form eines Ladenanschlusses zum Anschließen eines Ladekabels (z.B. eine Ladesteckeraufnahme, beispielsweise in Form einer Ladesteckerbuchse). Unter einem fest angeschlagenen Ladekabel ist insbesondere zu verstehen, dass ein Nutzer das Ladekabel nicht zerstörungsfrei von der Ladestation trennen kann.

Die Ladestation kann eine Ladevorrichtung umfassen, die in herkömmlicher Weise über Komponenten verfügen kann, um einen bestimmten Stromfluss von einer Stromquelle (z.B. ein öffentliches Stromnetz, Energieerzeuger etc.) über den Ladepunkt und einem Ladekabel zu ermöglichen. Hierdurch kann ein elektrisch betriebenes Fahrzeug bzw. dessen elektrischen Energiespeicher geladen (oder entladen) werden.

Die Ladevorrichtung kann in der Ladestation integriert oder als "Wallbox" gebildet sein. Insbesondere ist die Ladevorrichtung ein Teil der Ladestation. Auch kann die Ladevorrichtung, insbesondere die Komponenten bzw. die Ladetechnik, in einer Wand oder einem Boden integriert sein. Es versteht sich, dass eine bidirektionale Strom- bzw. Leistungsübertragung über die Ladekabel und die Ladetechnik der Ladevorrichtung erfolgen kann.

Um einen Stromfluss über einen Ladepunkt zu ermöglichen, ist eine Freigabe bzw. Freischaltung des entsprechenden Ladepunkts im Allgemeinen erforderlich. Hierfür ist dem ersten Ladepunkt der Ladestation eine Ladepunktkennung zugeordnet. Insbesondere ist eine eindeutige Zuordnung einer Ladepunktkennung zu einem Ladepunkt in einem Ladesystem mit insbesondere einer Mehrzahl von Ladestation eines bestimmten Betreibers vorgesehen. Anders ausgedrückt kann insbesondere jeder Ladepunkt in einem Ladesystem durch die jeweilige Ladepunktkennung eindeutig identifiziert werden.

Für die Freigabe des Ladepunkts kann insbesondere die Nutzung eines mobilen Nutzerendgeräts erforderlich sein. Die Ladestation weist mindestens ein Nahfeld-Sendemodul auf, um insbesondere zumindest nahezu kontinuierlich ein von einem mobilen Nutzerendgerät empfangbares Identifikationssignal auszusenden, welches die Ladepunktkennung (beispielsweise in Form eines eindeutigen Codes) enthält. Unter einem Nahfeld-Sendemodul ist vorliegend eine drahtlose Schnittstelle zu verstehen, die eine Reichweite zwischen 0,2 m und 15 m, vorzugsweise zwischen 0,2 m und 5 m, und eine Antenne zumindest zum Emittieren eines Signals umfasst.

Grundsätzlich kann das erste Nahfeld-Sendemodul beliebig gebildet sein, sofern das Nahfeld-Sendemodul eine bestimmte Reichweite (zwischen 0,2 m und 15 m) bereitstellt und insbesondere zu dem mindestens einen Nahfeld-Empfangsmodul des mobilen Nutzerendgeräts korrespondiert. Vorzugsweise kann das erste Nahfeld-Sendemodul, gemäß einer ersten Ausführungsform der anmeldungsgemäßen Ladestation, ein Bluetooth-Sendemodul sein. Insbesondere kann das Bluetooth-Sendemodul ein Bluetooth-Token, insbesondere ein BLE (Bluetooth Low Energy) - Token sein. Bluetooth ist besonders geeignet, da eine Vielzahl von (unterschiedlichen) mobilen Nutzerendgeräten über korrespondierende Schnittstellen verfügt und die gewünschten Reichweiten erzielt werden können. Zudem ist ein Bluetooth-Signal entsprechend dem BLE-Standard von nahezu jedem mobilen Nutzerendgerät empfangbar und bearbeitbar.

Das mobile Nutzerendgerät kann über ein korrespondierendes Bluetooth-Modul verfügen. Beispielhafte und nicht abschließende mobile Nutzerendgerät sind Smartphones, Tablet-Computer, Smart-Watches, Laptops und Navigationsgeräte (oder dergleichen) eines zu ladenden Elektrofahrzeugs.

Gemäß einer bevorzugten Ausführungsform der Ladestation gemäß der vorliegenden Anmeldung kann die Ladestation mindestens einen weiteren Ladepunkt umfassen, der eingerichtet sein kann zum Abgeben von elektrischer Leistung. Der weitere Ladepunkt kann entsprechend dem zuvor beschriebenen Ladepunkt gebildet sein. Es versteht sich, dass bei anderen Varianten der Anmeldung die Ladestation über drei oder mehr Ladepunkte verfügen kann.

Dem weiteren Ladepunkt kann eine weitere (eindeutige) Ladepunktkennung zugeordnet sein. Das erste Nahfeld-Sendemodul kann eingerichtet sein zum Aussenden eines zweiten zumindest die erste Ladepunktkennung und die weitere Ladepunktkennung enthaltenden Identifikationssignals. Während das zuvor beschriebene erste Identifikationssignal nur eine einzelne Ladepunktkennung enthält, umfasst ein zweites Identifikationssignal insbesondere zumindest zwei Ladepunktkennungen.

Bei Empfang eines zweiten Identifikationssignals kann eine Ladeanwendung eines mobilen Nutzerendgeräts die enthaltenen Ladepunktkennungen zur Anzeige bringen, um eine (manuelle) Auswahl durch einen Nutzer zu ermöglichen.

Gemäß einer weiteren bevorzugten Ausführungsform der Ladestation gemäß der vorliegenden Anmeldung kann die Ladestation mindestens einen weiteren Ladepunkt umfassen, der eingerichtet sein kann zum Abgeben von elektrischer Leistung. Der weitere Ladepunkt kann entsprechend dem zuvor beschriebenen Ladepunkt gebildet sein. Es versteht sich, dass bei anderen Varianten der Anmeldung die Ladestation über drei oder mehr Ladepunkte verfügen kann.

Dem weiteren Ladepunkt kann eine weitere (eindeutige) Ladepunktkennung zugeordnet sein. Das erste Nahfeld-Sendemodul kann eingerichtet sein zum Aussenden des die erste Ladepunktkennung enthaltenden ersten Identifikationssignals. Die Ladestation kann mindestens ein weiteres erstes Nahfeld-Sendemodul umfassen, eingerichtet zum Aussenden eines weiteren ersten die weitere Ladepunktkennung enthaltenden Identifikationssignals. Anders ausgedrückt ist dem ersten Ladepunkt ein erstes Nahfeld-Sendemodul zugeordnet, das nur die erste Ladepunktkennung aussendet, und dem weiteren Ladepunkt ein weiteres erstes Nahfeld-Sendemodul zugeordnet, das nur die weitere Ladepunktkennung aussendet. Die Notwendigkeit einer manuellen Auswahl durch einen Nutzer kann hierdurch entfallen.

Insbesondere kann jedem Ladepunkt einer Ladestation in eindeutiger Weise jeweils eine Ladekennung zugeordnet sein. Zudem kann jedem Ladepunkt jeweils ein erstes Nahfeld-Sendemodul zugeordnet sein, welches jeweils nur die jeweilige Ladepunktkennung aussendet.

Bei einer bevorzugten Ausführungsform kann das erste Nahfeld-Sendemodul eine Richtantenne umfassen, die eingerichtet sein kann, derart, dass das ausgesendete erste Identifikationssignal im Wesentlichen einen bestimmten ersten Bereich (beispielsweise einen Parkbereich, der von einem durch den ersten Ladepunkt zu ladenden Elektrofahrzeug genutzt wird) abdeckt. Vorzugsweise zusätzlich kann das weitere erste Nahfeld-Sendemodul (ebenfalls) eine Richtantenne umfassen, die eingerichtet sein kann, derart, dass das ausgesendete weitere erste Identifikationssignal im Wesentlichen einen bestimmten weiteren Bereich (beispielsweise einen Parkbereich, der von einem durch den weiteren Ladepunkt zu ladenden Elektrofahrzeug genutzt wird) abdeckt. Der weitere Bereich kann sich von dem ersten Bereich zumindest teilweise unterscheiden. Hierdurch kann erreicht werden, dass ein Nutzer (nur) die Ladepunktkennung eines Ladepunkts empfangen wird, welchen er (vorrausichtlich) nutzen und freischalten wird.

Ferner umfasst die Ladestation mindestens ein zweites Nahfeld-Sendemodul. Das zweite Nahfeld-Sendemodul kann insbesondere eine größere Sendereichweite (z.B. 2 bis 20 m) als das erste Nahfeld-Sendemodul aufweisen oder derart positioniert sein, dass ein Nutzer bei einer Annäherung an die Ladestation zunächst das Sendefeld des zweiten Nahfeld-Sendemoduls passieren muss, bevor der Nutzer das Sendefeld des ersten Nahfeld-Sendemoduls erreicht.

Das zweite Nahfeld-Sendemodul (z.B. ein Bluetooth- Sendemodul, wie ein BLE-Token) ist zum Aussenden eines zumindest eine Aktivierungsinstruktion enthaltenden Aktivierungssignals eingerichtet. Die Aktivierungsinstruktion ist eingerichtet, bei einem Empfang durch ein mobiles Nutzerendgerät eine auf dem mobilen Nutzerendgerät installierte Ladeanwendung (automatisch) zu aktivieren. Die erforderlichen manuellen Nutzeraktionen können noch weiter reduziert werden.

Gemäß einer weiteren Ausführungsform der anmeldungsgemäßen Ladestation kann die Ladestation mindestens ein Empfangsmodul umfassen, eingerichtet zum Empfangen mindestens eines Freigabesignals. Die Ladestation kann mindestens ein Freigabemodul umfassen, eingerichtet zum Freigeben eines Austauschprozesses, insbesondere eines Ladevorgangs, zwischen dem Ladepunkt und einem Elektrofahrzeug, wobei der freizugebende Ladepunkt durch die Ladepunktkennung des Ladepunkts, die in dem Freigabesignal enthalten ist, identifizierbar ist. Ein Freigabesignal kann insbesondere von einem Hintergrundsystem (aber auch von der Ladestation selbst) bei einer erfolgreichen Authentifizierung, wenn also festgestellt wurde, dass der Nutzer zur Nutzung des Ladepunkts berechtigt ist, generiert und ausgesendet werden.

Ein weiterer Aspekt der Anmeldung ist ein Ladesystem. Das Ladesystem umfasst mindestens eine zuvor beschriebene Ladestation. Das Ladesystem umfasst mindestens eine der Ladestation zugeordnete Sendevorrichtung, umfassend mindestens ein zweites (z.B. zuvor beschriebenes) Nahfeld-Sendemodul, eingerichtet zum Aussenden eines zumindest eine Aktivierungsinstruktion enthaltenden Aktivierungssignals. Die Aktivierungsinstruktion kann eingerichtet sein (wenn sie z.B. von einem Prozessor ausgeführt wird), bei einem Empfang durch ein mobiles Nutzerendgerät eine auf dem mobilen Nutzerendgerät installierte Ladeanwendung zu aktivieren.

Das Ladesystem kann zwei oder mehr Ladestationen umfassen. Ferner kann das Ladesystem ein Hintergrundsystem (auch Backendsystem genannt) umfassen, welches zur Steuerung der Ladestationen vorgesehen ist. Insbesondere kann das Hintergrundsystem in herkömmlicher Weise für eine Authentifizierung von Nutzern, die einen Ladepunkt nutzen wollen, eingerichtet sein.

Gemäß einer ersten Ausführungsform des anmeldungsgemäßen Ladesystems kann das Ladesystem mindestens ein (zuvor beschriebenes) mobiles Nutzerendgerät mit mindestens einer Ladeanwendung umfassen. Das mobile Nutzerendgerät kann mindestens ein Nahfeld-Empfangsmodul umfassen, eingerichtet zum Empfangen eines Identifikationssignals. Die Ladeanwendung kann mindestens ein Verarbeitungsmittel umfassen, eingerichtet zum Initiieren eines Authentifizierungsprozesses, basierend auf der mindestens einen in dem Identifikationssignal enthaltenden Ladepunktkennung. Beispielsweise kann das Verarbeitungsmittel die Aussendung eines Authentifizierungssignals durch ein Sendemodul des mobilen Nutzerendgeräts bewirken. Das Authentifizierungssignal kann beispielsweise eine Nutzerkennung und die empfangene Ladepunktkennung enthalten.

Ein noch weiterer Aspekt der Anmeldung ist ein Verfahren zum Betreiben einer Ladestation, insbesondere einer zuvor beschriebenen Ladestation. Das Verfahren umfasst:
- Bereitstellen mindestens einer ersten Ladepunktkennung, die einem ersten Ladepunkt der Ladestation zugeordnet ist, und
- Aussenden, durch mindestens ein erstes Nahfeld-Sendemodul der Ladestation, eines ersten die erste Ladepunktkennung enthaltenden Identifikationssignals.

Ein noch weiterer Aspekt der Anmeldung ist eine Ladeanwendung, insbesondere eine Software-Ladeanwendung, für eine Installation auf einem mobilen Nutzerendgerät. Die Ladeanwendung umfasst mindestens ein Empfangsmittel, eingerichtet zum Erhalten mindestens einer durch ein Nahfeld-Empfangsmodul des mobilen Nutzerendgeräts empfangenen Ladepunktkennung eines Ladepunkts einer Ladestation. Die Ladeanwendung umfasst mindestens ein Verarbeitungsmittel, eingerichtet zum Initiieren eines Authentifizierungsprozesses, basierend auf der erhaltenen Ladepunktkennung.

Um ein Erhalten und Verarbeiten einer Ladepunktkennung zu ermöglichen, kann es zunächst erforderlich sein, die Ladeanwendung zu aktivieren bzw. zu starten. Dies kann manuell durch den Nutzer erfolgen oder, gemäß einer bevorzugten Ausführungsform, automatisch bei Empfang einer (zuvor beschriebenen) Aktivierungsinstruktion eines Aktivierungssignals.

Es sei angemerkt, dass allgemein ein Empfangsmodul zusätzlich eingerichtet sein kann zum Senden eines Signals und ein Sendemodul zusätzlich eingerichtet sein kann zum Empfangen eines Signals. Es sei ferner angemerkt, dass anmeldungsgemäße Einrichtungen, Module, Mittel etc. aus Hardwarekomponenten (z.B. Prozessoren, Schnittstellen, Speichermitteln etc.) und/oder Softwarekomponenten gebildet sein können.

Die Merkmale der Ladestationen, Systeme, Verfahren und Ladeanwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Ladestation, das anmeldungsgemäße Ladesystem, das anmeldungsgemäße Verfahren und die anmeldungsgemäße Ladeanwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Ladestation gemäß der vorliegenden Anmeldung,
- Fig. 2: eine schematische Ansicht eines weiteren Ausführungsbeispiels einer Ladestation gemäß der vorliegenden Anmeldung,
- Fig. 3: eine schematische Ansicht eines weiteren Ausführungsbeispiels einer Ladestation gemäß der vorliegenden Anmeldung,
- Fig. 4: eine schematische Ansicht eines Ausführungsbeispiels eines Ladesystems gemäß der vorliegenden Anmeldung,
- Fig. 5: eine schematische Ansicht eines weiteren Ausführungsbeispiels eines Ladesystems gemäß der vorliegenden Anmeldung, und
- Fig. 6: ein Diagramm eines Ausführungsbeispiels eines Verfahrens gemäß der vorliegenden Anmeldung.

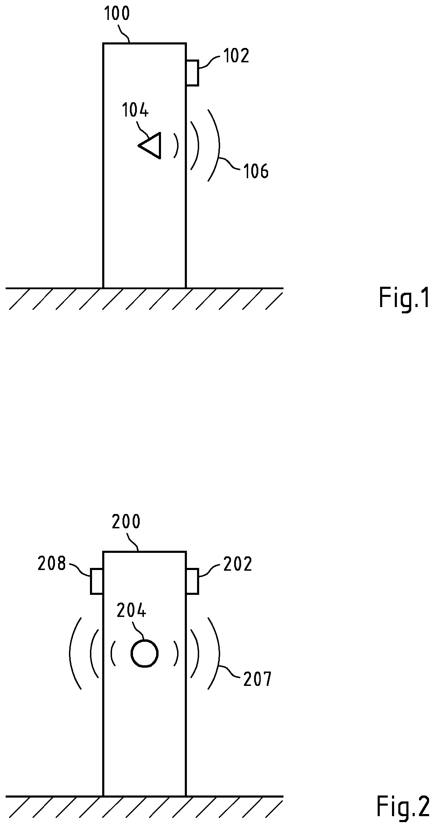

Nachfolgend werden für gleiche Elemente gleiche Bezugszeichen verwendet. Die Figur 1 zeigt eine schematische Ansicht eines Ausführungsbeispiels einer Ladestation 100 gemäß der vorliegenden Anmeldung. Die Ladestation 100 umfasst einen ersten Ladepunkt 102. Der Ladepunkt 102 kann insbesondere einen Ladeanschluss umfassen, um ein (nicht gezeigtes) Elektrofahrzeug über ein (nicht gezeigtes) Ladekabel zu laden (oder zu entladen). Die Ladestation 100 umfasst ein Gehäuse, in dem eine Ladevorrichtung (z.B. die Ladetechnik, die mit dem Ladeanschluss gekoppelt ist) integriert sein kann.

Dem ersten Ladepunkt 102 ist eine Ladepunktkennung eindeutig zugeordnet. Die Ladepunktkennung kann für einen Authentifizierungsprozess erforderlich sein, um anschließend den Ladepunkt 102 freizuschalten.

Die Ladestation 100 umfasst ein erstes Nahfeld-Sendemodul 104. Das erste Nahfeld-Sendemodul 104 ist insbesondere ein Bluetooth-Sendemodul 104, vorzugsweise ein BLE-Token 104. Das BLE-Token 104 sendet (nahezu kontinuierlich) ein erstes Identifikationssignal 106 aus.

Das erste Identifikationssignal 106 enthält die erste Ladepunktkennung. Ein in Reichweite (z.B. 0,2m bis 10m) des BLE-Tokens 104 befindliches (nicht gezeigtes) mobiles Nutzerendgerät mit einem (aktivierten) Bluetooth-Empfangsmodul kann das erste Identifikationssignal 106 empfangen, die darin enthaltene erste Ladepunktkennung extrahieren und für einen Authentifizierungsprozess verwenden.

Die Figur 2 zeigt eine schematische Ansicht eines Ausführungsbeispiels einer Ladestation 200 gemäß der vorliegenden Anmeldung. Zur Vermeidung von Wiederholungen werden nachfolgend im Wesentlichen nur die Unterschiede zu dem Ausführungsbeispiel nach Figur 1 beschrieben.

Die Ladestation 200 weist einen ersten Ladepunkt 202 und einen weiteren Ladepunkt 208 auf. Dem ersten Ladepunkt 202 ist eine ersten Ladepunktkennung und dem weiteren Ladepunkt 208 eine weitere Ladepunktkennung jeweils eindeutig zugeordnet.

Darüber hinaus umfasst die dargestellte Ladestation 200 ein erstes Nahfeld-Sendemodul 204, insbesondere ein BLE-Token 204. Das BLE-Token 204 ist eingerichtet, insbesondere nahezu kontinuierlich ein zweites Identifikationssignal 207 auszusenden.

Das zweite Identifikationssignal 207 enthält die erste Ladepunktkennung und die weitere Ladepunktkennung. Ein sich in Reichweite des BLE-Tokens 204 befindliches (nicht gezeigtes) mobiles Nutzerendgerät mit einem Bluetooth-Empfangsmodul kann das zweite Identifikationssignal 207 empfangen, die darin enthaltenen Ladepunktkennungen extrahieren und für eine Auswahl auf einer Anzeige des mobilen Nutzerendgeräts anzeigen. Nach einer (manuellen) Auswahl aufgrund einer Detektion eines Nutzereingabemoduls des mobilen Nutzerendgeräts kann die ausgewählte Ladepunktkennung in einem Authentifizierungsprozess verwendet werden.

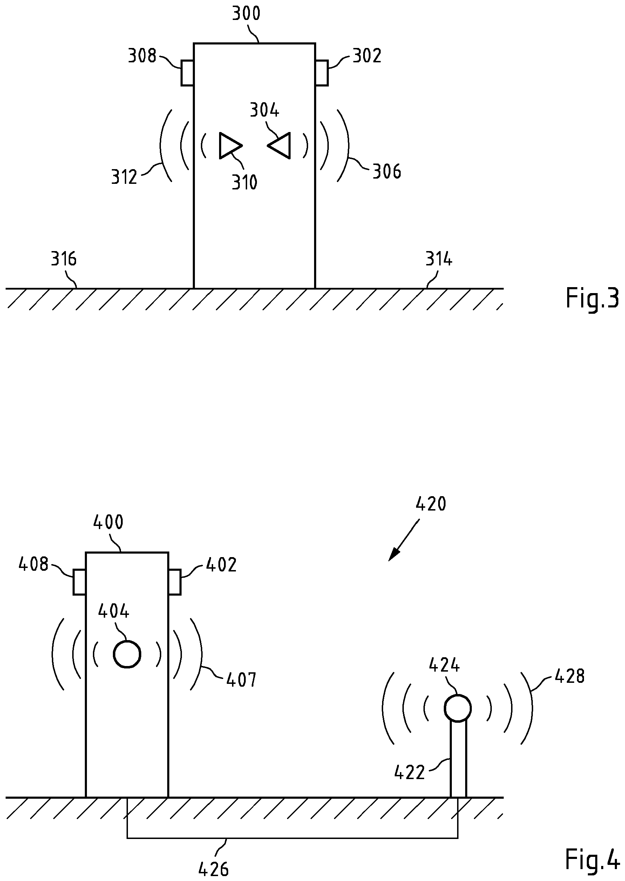

Die Figur 3 zeigt eine schematische Ansicht eines weiteren Ausführungsbeispiels einer Ladestation 300 gemäß der vorliegenden Anmeldung. Zur Vermeidung von Wiederholungen werden nachfolgend im Wesentlichen nur die Unterschiede zu dem Ausführungsbeispielen nach Figur 1 und 2 beschrieben.

Die Ladestation 300 umfasst ein erstes Nahfeld-Sendemodul 304 (z.B. ein Bluetooth-Modul) und ein weiteres erstes Nahfeld-Sendemodul 310 (z.B. ein Bluetooth-Modul). Das erste Nahfeld-Sendemodul 304 ist dem ersten Ladepunkt 302 und das weitere erste Nahfeld-Sendemodul 310 dem weiteren Ladepunkt 308 zugeordnet.

Das erste Nahfeld-Sendemodul 304 sendet (nahezu kontinuierlich) ein erstes Identifikationssignal 306 aus und das weitere erste Nahfeld-Sendemodul 310 ein weiteres erstes Identifikationssignal 312 aus. Das erste Identifikationssignal 306 enthält die erste Ladepunktkennung und das weitere erste Identifikationssignal 312 die weitere Ladepunktkennung.

Vorzugsweise weisen die Sendemodule 304, 310 jeweils eine Richtantenne auf, eingerichtet, derart, dass das ausgesendete erste Identifikationssignal 306 im Wesentlichen einen bestimmten ersten Bereich 314 (beispielsweise der Parkbereich 314 vor dem ersten Ladepunkt 302) abdeckt und das ausgesendete weitere erste Identifikationssignal 312 im Wesentlichen einen bestimmten weiteren Bereich (beispielsweise der Parkbereich 316 vor dem weiteren Ladepunkt 308) abdeckt, der sich von dem ersten Bereich 314 unterscheidet.

Ein im Bereich 314 befindliches (nicht gezeigtes) mobiles Nutzerendgerät mit einem Bluetooth-Empfangsmodul kann das erste Identifikationssignal 306 empfangen, die darin enthaltene erste Ladepunktkennung extrahieren und für einen Authentifizierungsprozess verwenden. Ein im Bereich 316 befindliches (nicht gezeigtes) mobiles Nutzerendgerät mit einem Bluetooth-Empfangsmodul kann das weitere erste Identifikationssignal 312 empfangen, die darin enthaltene weitere Ladepunktkennung extrahieren und für einen Authentifizierungsprozess verwenden. Eine manuelle Auswahl einer Ladepunktkennung kann entfallen.

Die Figur 4 zeigt eine schematische Ansicht eines Ausführungsbeispiels eines Ladesystems 420 gemäß der vorliegenden Anmeldung mit einem Ausführungsbeispiel einer Ladestation 400 gemäß der vorliegenden Anmeldung. Die Ladestation 400 kann insbesondere der Ladestation 200 nach Figur 2 entsprechen.

Wie aus der Figur 4 zu erkennen ist, ist der Ladestation 400 eine Sendevorrichtung 422 zugeordnet, insbesondere ist die Ladestation mit dieser über eine Verbindung 426 gekoppelt. Die Sendevorrichtung 422 weist vorliegend ein zweites Nahfeld-Sendemodul 424 auf, insbesondere ein BLE-Modul 424. Das zweite Nahfeld-Sendemodul 424 sendet ein Aktivierungssignal 428 (nahezu kontinuierlich) aus. Das Aktivierungssignal 428 enthält mindestens eine Aktivierungsinstruktion.

Ein in Reichweite des zweiten Nahfeld-Sendemoduls 424 befindliches (nicht gezeigtes) mobiles Nutzerendgerät mit einem (aktivierten) Bluetooth-Empfangsmodul kann das Aktivierungssignal 428 empfangen, die darin enthaltene weitere Aktivierungsinstruktion extrahieren und ausführen, um eine auf dem mobilen Nutzerendgerät installierte Ladeanwendung automatisch zu aktivieren bzw. zu starten. Wenn das mobile Nutzerendgerät dann mit der aktivierten Ladeanwendung in Reichweite des zweiten Identifikationssignals 407 gelangt, kann das zweite Identifikationssignal 207 empfangen, die darin enthaltenen Ladepunktkennungen extrahiert und für eine Auswahl auf einer Anzeige des mobilen Nutzerendgeräts angezeigt werden. Nach einer (manuellen) Auswahl aufgrund einer Detektion eines Nutzereingabemoduls kann die ausgewählte Ladepunktkennung in einem Authentifizierungsprozess verwendet werden.

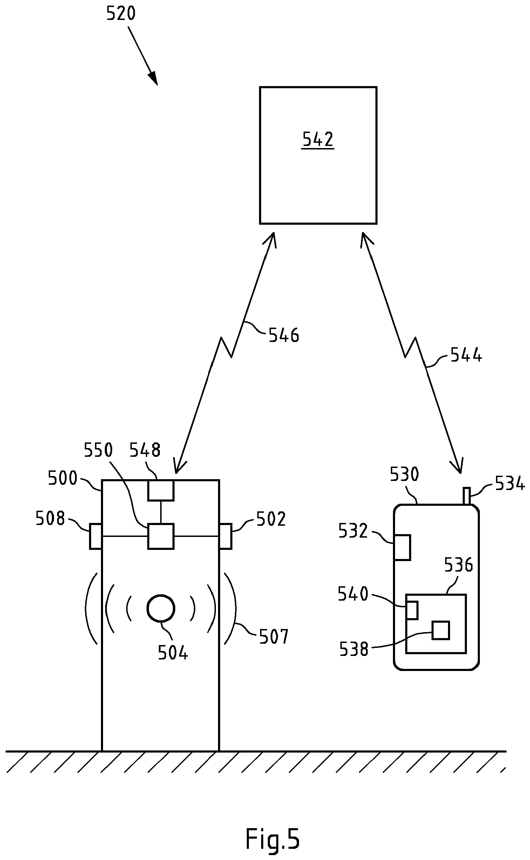

Die Figur 5 zeigt eine schematische Ansicht eines weiteren Ausführungsbeispiels eines Ladesystems 520 gemäß der vorliegenden Anmeldung mit einem Ausführungsbeispiel einer Ladestation 500 gemäß der vorliegenden Anmeldung. Zur Vermeidung von Wiederholungen werden nachfolgend im Wesentlichen nur die Unterschiede zu den Ausführungsbeispielen nach den Figuren 1 bis 4 beschrieben.

Das dargestellte Ladesystem 520 umfasst mindestens eine Ladestation 500, mindestens ein Hintergrundsystem 542 (z.B. einen oder mehrere Server) und mindestens ein mobiles Nutzerendgerät 530 eines Nutzers eines (nicht gezeigten) Elektrofahrzeugs. Das Nutzerendgerät 530 kann in dem Elektrofahrzeug integriert sein oder beispielsweise ein Smartphone 530 sein, welches von dem Nutzer getragen werden kann.

Die Ladestation 500 umfasst, neben dem bereits beschriebenen ersten und dem mindestens einen weiteren Ladepunkt 502, 508 sowie einem Nahfeld-Sendemodul 504, ein Empfangsmodul 548, beispielsweise eingerichtet zum Empfangen eines Mobilfunksignals 546 und ein mit dem Empfangsmodul 548 gekoppeltes Freigabemodul 550.

Das mobile Nutzerendgerät 530 weist ein zu dem Nahfeld-Sendemodul 504 korrespondierendes Nahfeld-Empfangsmodul 532, insbesondere ein Bluetooth-Modul 532, und ein Sendemodul 534, insbesondere ein Mobilfunkmodul 534, auf. Darüber hinaus ist vorliegend ein Ausführungsbeispiel einer Ladeanwendung 536 ("Ladeapp") auf dem mobilen Nutzerendgerät 530 installiert. Die Ladeanwendung 536 weist ein Empfangsmittel 540 und ein Verarbeitungsmittel 538, insbesondere in Form von ausführbarem Code, auf.

Empfängt das mobile Nutzerendgerät 530 in zuvor beschriebener Weise ein zweites Identifikationssignal, werden die darin enthaltenen Ladepunktkennungen über das Empfangsmittel 540 an das Verarbeitungsmittel 538 zur weitere Verarbeitung weitergeleitet. Dies setzt in der Regel voraus, dass die Ladeanwendung 536 zuvor aktiviert worden ist (vgl. z.B. Fig. 4).

Das Verarbeitungsmittel 538 bewirkt ein Anzeigen der Ladepunktkennungen über ein (nicht gezeigtes) Display, wie ein Touch-Display, des mobilen Nutzerendgeräts 430. Bei Detektion einer Auswahl einer der Ladepunktkennungen durch ein Nutzereingabemodul (z.B. das Touch-Display) bewirkt das Verarbeitungsmittel 538 ein Aussenden eines Authentifizierungssignals durch das Mobilfunkmodul 534 über ein Mobilfunknetz 544. Das Authentifizierungssignal kann die ausgewählte Ladepunktkennung und eine Nutzerkennung umfassen. Es versteht sich, dass ein Authentifizierungssignal weitere Daten (z.B. Passwort, Zeitstempel etc.) umfassen kann.

Das Hintergrundsystem 542 führt einen Authentifizierungsprozess durch. Insbesondere kann die Berechtigung des Nutzers zur Nutzung des durch die Ladepunktkennung identifizierbaren Ladepunkts 502, 508 (in herkömmlicher Weise) durch das Hintergrundsystem 542 geprüft werden. Wenn das Ergebnis positiv ist, der Nutzer also zur Nutzung des durch die Ladepunktkennung identifizierbaren Ladepunkts 502, 508 berechtigt ist, sendet das Hintergrundsystem 542 ein Freigabesignal über das Mobilfunknetz 546 an die Ladestation 500.

Die Ladestation 500 empfängt das Freigabesignal durch das Empfangsmodul 548. Die in dem Freigabesignal enthaltende Ladepunktkennung des freizugebenden Ladepunkts 502, 508 kann extrahiert werden und dem Freigabemodul 550 bereitgestellt werden. Die Ladepunktkennung ist insbesondere die gleiche, die in dem Authentifizierungssignal enthalten war. Das Freigabemodul 550 ist eingerichtet, den Ladepunkt 502, 508 entsprechend der Ladepunktkennung für einen Ladevorgang freizugeben. Elektrische Leistung kann übertragen werden.

Bei einem negativen Authentifizierungsergebnis, wenn also der Nutzer zur Nutzung des durch die Ladepunktkennung identifizierbaren Ladepunkts 502, 508 nicht berechtigt ist, kann das Aussenden eines Freigabesignals unterbleiben. Es versteht sich, dass der Nutzer durch ein entsprechendes Signal an die Ladestation oder an das mobile Nutzerendgerät informiert werden kann, dass die Authentifizierung fehlgeschlagen ist.

Es versteht sich, dass Mobilfunknetz 546 und 544 identisch sein können. Zudem kann bei Varianten der Anmeldung anstelle des Mobilfunknetzes 546 auch eine andere drahtlose und/oder drahtgebundene Kommunikationstechnik genutzt werden.

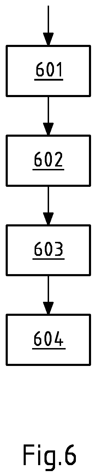

Die Figur 6 zeigt ein Diagramm eines Ausführungsbeispiels eines Verfahrens zum Betreiben einer Ladestation, insbesondere einer zuvor beschriebenen Ladestation 100, 200, 300, 400, 500.

In einem ersten Schritt 601 kann mindestens eine erste Ladepunktkennung, die einem ersten Ladepunkt der Ladestation zugeordnet ist, bereitgestellt werden. Bei einer Mehrzahl von Ladepunkten kann eine entsprechende Mehrzahl von Ladepunktkennungen bereitgestellt werden.

In einem nächsten Schritt 602 kann, durch mindestens ein erstes Nahfeld-Sendemodul (vorzugsweise ein BLE-Token) der Ladestation, mindestens ein erstes (oder zweites) die erste Ladepunktkennung enthaltendes Identifikationssignal (vorzugsweise kontinuierlich) ausgesendet werden.

Ferner kann das Verfahren zum Betreiben einer Ladestation das Empfangen eines Freigabesignals in Schritt 603 umfassen. Nach einem Empfang des Freigabesignals kann in Schritt 604 eine Freigabe eines Ladepunkts durch ein Freigabemodul der Ladestation bewirkt werden, basierend auf der in dem empfangenen Freigabesignal enthaltenen Ladepunktkennung. Die Schritte 603 und 604 können zumindest teilweise parallel zu den Schritten 601, 602 durchgeführt werden.

## Patentansprüche

1. Ladestation (100, 200, 300, 400, 500) zum Laden von Elektrofahrzeugen, umfassend:
- mindestens einen ersten Ladepunkt (102, 202, 302, 402, 502), eingerichtet zum Abgeben von elektrischer Leistung,
- wobei dem ersten Ladepunkt (102, 202, 302, 402, 502) eine erste Ladepunktkennung zugeordnet ist, wobei
- die Ladestation (100, 200, 300, 400, 500) mindestens ein erstes Nahfeld-Sendemodul (104, 204, 304, 310, 404, 504) umfasst, eingerichtet zum Aussenden eines ersten zumindest die erste Ladepunktkennung enthaltenden Identifikationssignals, **dadurch gekennzeichnet, dass**
- die Ladestation (100, 200, 300, 400, 500) mindestens ein zweites Nahfeld-Sendemodul (424) umfasst, eingerichtet zum Aussenden eines zumindest eine Aktivierungsinstruktion enthaltenden Aktivierungssignals,
- wobei die Aktivierungsinstruktion eingerichtet ist, bei einem Empfang durch ein mobiles Nutzerendgerät (530) eine auf dem mobilen Nutzerendgerät (530) installierte Ladeanwendung (536) zu aktivieren

2. Ladestation (100, 200, 300, 400, 500) nach Anspruch 1, **dadurch gekennzeichnet, dass** das erste Nahfeld-Sendemodul (104, 204, 304, 310, 404, 504) ein Bluetooth-Sendemodul (104, 204, 304, 310, 404, 504) ist.

3. Ladestation (100, 200, 300, 400, 500) nach Anspruch 1 oder 2, **dadurch gekennzeichnet, dass**
- die Ladestation (100, 200, 300, 400, 500) mindestens einen weiteren Ladepunkt (208, 308, 408, 508) umfasst, eingerichtet zum Abgeben von elektrischer Leistung,
- wobei dem weiteren Ladepunkt (208, 308, 408, 508) eine weitere Ladepunktkennung zugeordnet ist, und
- das erste Nahfeld-Sendemodul (104, 204, 304, 310, 404, 504) eingerichtet ist zum Aussenden eines zweiten zumindest die erste Ladepunktkennung und die weitere Ladepunktkennung enthaltenden Identifikationssignals.

4. Ladestation (100, 200, 300, 400, 500) nach Anspruch 1 oder 2, **dadurch gekennzeichnet, dass**
- die Ladestation (100, 200, 300, 400, 500) mindestens einen weiteren Ladepunkt (208, 308, 408, 508) umfasst, eingerichtet zum Abgeben von elektrischer Leistung,
- wobei dem weiteren Ladepunkt (208, 308, 408, 508) eine weitere Ladepunktkennung zugeordnet ist, und
- die Ladestation (100, 200, 300, 400, 500) mindestens ein weiteres erstes Nahfeld-Sendemodul (310) umfasst, eingerichtet zum Aussenden eines weiteren ersten die weitere Ladepunktkennung enthaltenden Identifikationssignals.

5. Ladestation (100, 200, 300, 400, 500) nach Anspruch 4, **dadurch gekennzeichnet, dass**
- das erste Nahfeld-Sendemodul (302) eine Richtantenne umfasst, eingerichtet, derart, dass das ausgesendete erste Identifikationssignal im Wesentlichen einen bestimmten ersten Bereich (314) abdeckt, und
- das weitere erste Nahfeld-Sendemodul (310) eine Richtantenne umfasst, eingerichtet, derart, dass das ausgesendete weitere erste Identifikationssignal im Wesentlichen einen bestimmten weiteren Bereich (316) abdeckt, der sich von dem ersten Bereich (314) unterscheidet.

6. Ladesystem (420, 520), umfassend:
- mindestens eine Ladestation (100, 200, 300, 400, 500) nach einem der vorherigen Ansprüche, und
- mindestens eine der Ladestation (100, 200, 300, 400, 500) zugeordnete Sendevorrichtung (422), umfassend mindestens ein zweites Nahfeld-Sendemodul (424), eingerichtet zum Aussenden eines zumindest eine Aktivierungsinstruktion enthaltenden Aktivierungssignals,
- wobei die Aktivierungsinstruktion eingerichtet ist, bei einem Empfang durch ein mobiles Nutzerendgerät (530) eine auf dem mobilen Nutzerendgerät (530) installierte Ladeanwendung (536) zu aktivieren.

7. Ladesystem (420, 520) nach Anspruch 6, **dadurch gekennzeichnet, dass**
- das Ladesystem (420, 520) mindestens ein mobiles Nutzerendgerät (530) mit mindestens einer Ladeanwendung (536) umfasst,
- wobei das mobile Nutzerendgerät (536) mindestens ein Nahfeld-Empfangsmodul (532) umfasst, eingerichtet zum Empfangen eines Identifikationssignals, und
- wobei die Ladeanwendung (536) mindestens ein Verarbeitungsmittel (538) umfasst, eingerichtet zum Initiieren eines Authentifizierungsprozesses, basierend auf der mindestens einen in dem Identifikationssignal enthaltenden Ladepunktkennung.

8. Verfahren zum Betreiben einer Ladestation (100, 200, 300, 400, 500) nach einem der Ansprüche 1 bis 6, umfassend:
- Bereitstellen mindestens einer ersten Ladepunktkennung, die einem ersten Ladepunkt (102, 202, 302, 402, 502) der Ladestation (100, 200, 300, 400, 500) zugeordnet ist,
- Aussenden eines eine Aktivierungsinstruktion enthaltenden Aktivierungssignals, um eine auf dem mobilen Nutzerendgerät installierte Ladeanwendung zu aktivieren, und
- Aussenden, durch mindestens ein erstes Nahfeld-Sendemodul (104, 204, 304, 310, 404, 504) der Ladestation (100, 200, 300, 400, 500), eines ersten die erste Ladepunktkennung enthaltenden Identifikationssignals.

9. Ladeanwendung (536), insbesondere Software-Ladeanwendung (536), für eine Installation auf einem mobilen Nutzerendgerät (530), umfassend:
- mindestens ein Empfangsmittel (540), eingerichtet zum Erhalten mindestens einer durch ein Nahfeld-Empfangsmodul (532) des mobilen Nutzerendgeräts (530) empfangenen Ladepunktkennung eines Ladepunkts (102, 202, 302, 402, 502) einer Ladestation (100, 200, 300, 400, 500), und
- mindestens ein Verarbeitungsmittel (538), eingerichtet zum Initiieren eines Authentifizierungsprozesses, basierend auf der erhaltenen Ladepunktkennung, wobei die Ladeanwendung zum automatischen Empfang einer Aktivierungsinstruktion eines Aktivierungssignals eingerichtet ist.

## Claims

1. Charging station (100, 200, 300, 400, 500) for charging electric vehicles comprising:
- at least one charging point (102, 202, 302, 402, 502) configured to deliver electrical power,
- wherein a first charging point identifier is allocated to a first charging point (102, 202, 302, 402, 502),
- wherein the charging station (100, 200, 300, 400, 500) comprises at least a first near field transmitter module (104, 204, 304, 310, 404, 504) configured to transmit an identification signal which comprises at least the first charging point identifier, **characterised in that**
- the charging station (100, 200, 300, 400, 500) comprises at least one second near field transmitter module (424) configured to transmit an activation signal comprising at least one activation instruction,
- wherein the activation signal is configured to activate a charging application (536) installed on a mobile user device (530) upon receipt by the mobile user device (530).

2. Charging station (100, 200, 300, 400, 500) according to claim 1, **characterised in that** the first near field transmitter module (104, 204, 304, 310, 404, 504) is a Bluetooth transmitter module.

3. Charging station (100, 200, 300, 400, 500) according to anyone of the claims 1 or 2, **characterised in that**
- the charging station (100, 200, 300, 400, 500) comprises at least one further charging point (208, 308, 408, 508) configured for delivery of electrical power,
- wherein a further charging point identifier is allocated to the further charging point (208, 308, 408, 508) and
- the first near field transmitter module (104, 204, 304, 310, 404, 504) is configured to transmit a second identification signal comprising at least the first charging point identifier and the further charging point identifier.

4. Charging station (100, 200, 300, 400, 500) according to anyone of claims 1 or 2, **characterised in that**
- the charging station (100, 200, 300, 400, 500) comprises at least one further charging point (208, 308, 408, 508) configured to deliver electrical power,
- wherein a further charging point identifier is allocated to the further charging point (208, 308, 408, 508) and
- wherein the charging station (100,200,300,400,500) comprises at least one further first near field transmitter module (310) configured to transmit a further first identification signal comprising the further charging point identifier.

5. Charging station (100, 200, 300, 400, 500) according to claim 4, **characterised in that**
- the first near field transmitter module (302) comprises a directional antenna configured such that the transmitted first identification signal covers a first area (314) and
- the further first near field transmitter module (310) comprises a directional antenna configured such that the transmitted further first identification signal covers a certain wider area (316) which is different from the first area (314).

6. Charging system (420, 520) comprising:
- at least one charging station (100, 200, 300, 400, 500) according to anyone of the preceding claims and
- at least one transmitting device (422) allocated to the charging station (100, 200, 300, 400, 500), the transmitter comprising at least a second near field transmitter module (424) configured to transmit an activation signal comprising an activation instruction,
- wherein the activating instruction is configured to activate a charging application (536) installed on a mobile user device (530) upon receipt of the activation instruction on the mobile user device (530).

7. Charging system (420, 520) according to claim 6, **characterised in that**
- the charging system (420, 520) comprises at least one mobile user device (530) with at least one charging application (536),
- wherein the mobile user device (530) comprises at least one near field receiving module (532) configured to receive an identification signal and
- wherein the charging application (536) comprises at least one processing means (538) configured to start an authentication process based on the at least one charging point identifier included in the identification signal.

8. Method for operating a charging station (100, 200, 300, 400, 500) according to anyone of the claims 1 to 6 comprising:
- providing at least one charging point identifier allocated to a first charging point (102,202,302,402,502) of the charging station (100, 200, 300, 400, 500),
- transmitting an activation signal including an activating instruction in order to activate a charging application installed on the mobile user device and
- transmitting by at least a first near field communication transmitting module (104,204,304,310,404,504) of the charging station (100, 200, 300, 400, 500) a first identification signal including the first charging point identifier.

9. Charging application (536), in particular software charging application (536) for installation on a mobile user device (530) comprising:
- at least one receiving means (540) configured to receive at least a charging point identifier of a charging point (102,202,302,402,502) of a charging station (100, 200, 300, 400, 500) by a near field receiving module (532) of the mobile device (530) and
- at least one processing means (538) configured to start an authentication process, based on the charging point identifier received, wherein the charging application is configured for an automatic receipt of an activating instruction of an activating signal.

## Revendications

1. Station de charge (100, 200, 300, 400, 500) servant à charger des véhicules électriques comprenant :
- au moins un point de charge (102, 202, 302, 402, 502) configuré pour délivrer de l'énergie électrique,
- dans laquelle un premier identifiant de point de charge est attribué à un premier point de charge (102, 202, 302, 402, 502),
- dans laquelle la station de charge (100, 200, 300, 400, 500) comprend au moins un premier module émetteur en champ proche (104, 204, 304, 310, 404, 504) configuré pour émettre un signal d'identification qui comprend au moins le premier identifiant de point de charge, **caractérisée en ce que**
- la station de charge (100, 200, 300, 400, 500) comprend au moins un second module émetteur en champ proche (424) configuré pour émettre un signal d'activation comprenant au moins une instruction d'activation,
- dans laquelle le signal d'activation est configuré pour activer une application de charge (536) installée sur un dispositif utilisateur mobile (530) lors de la réception par le dispositif utilisateur mobile (530).

2. Station de charge (100, 200, 300, 400, 500) selon la revendication 1, **caractérisée en ce que** le premier module émetteur en champ proche (104, 204, 304, 310, 404, 504) est un module émetteur Bluetooth.

3. Station de charge (100, 200, 300, 400, 500) selon l'une quelconque des revendications 1 ou 2, **caractérisée en ce que**
- la station de charge (100, 200, 300, 400, 500) comprend au moins un point de charge supplémentaire (208, 308, 408, 508) configuré pour délivrer de l'énergie électrique,
- dans laquelle un identifiant de point de charge supplémentaire est attribué au point de charge supplémentaire (208, 308, 408, 508) et
- le premier module émetteur en champ proche (104, 204, 304, 310, 404, 504) est configuré pour émettre un second signal d'identification comprenant au moins le premier identifiant de point de charge et l'identifiant de point de charge supplémentaire.

4. Station de charge (100, 200, 300, 400, 500) selon l'une quelconque des revendications 1 ou 2, **caractérisée en ce que**
- la station de charge (100, 200, 300, 400, 500) comprend au moins un point de charge supplémentaire (208, 308, 408, 508) configuré pour délivrer de l'énergie électrique,
- dans laquelle un identifiant de point de charge supplémentaire est attribué au point de charge supplémentaire (208, 308, 408, 508) et
- dans laquelle la station de charge (100, 200, 300, 400, 500) comprend au moins un premier module émetteur en champ proche supplémentaire (310) configuré pour émettre un premier signal d'identification supplémentaire comprenant l'identifiant de point de charge supplémentaire.

5. Station de charge (100, 200, 300, 400, 500) selon la revendication 4, **caractérisée en ce que**
- le premier module émetteur en champ proche (302) comprend une antenne directionnelle configurée de sorte que le premier signal d'identification émis couvre une première zone (314) et
- le premier module émetteur en champ proche supplémentaire (310) comprend une antenne directionnelle configurée de sorte que le premier signal d'identification supplémentaire émis couvre une certaine zone plus large (316) qui est différente de la première zone (314).

6. Système de charge (420, 520) comprenant :
- au moins une station de charge (100, 200, 300, 400, 500) selon l'une quelconque des revendications précédentes et
- au moins un dispositif d'émission (422) attribué à la station de charge (100, 200, 300, 400, 500), l'émetteur comprenant au moins un second module émetteur en champ proche (424) configuré pour émettre un signal d'activation comprenant une instruction d'activation,
- dans lequel l'instruction d'activation est configurée pour activer une application de charge (536) installée sur un dispositif utilisateur mobile (530) lors de la réception de l'instruction d'activation sur le dispositif utilisateur mobile (530).

7. Système de charge (420, 520) selon la revendication 6, **caractérisé en ce que**
- le système de charge (420, 520) comprend au moins un dispositif utilisateur mobile (530) avec au moins une application de charge (536),
- dans lequel le dispositif utilisateur mobile (530) comprend au moins un module de réception en champ proche (532) configuré pour recevoir un signal d'identification et
- dans lequel l'application de charge (536) comprend au moins un moyen de traitement (538) configuré pour démarrer un processus d'authentification sur la base de l'au moins un identifiant de point de charge inclus dans le signal d'identification.

8. Procédé de fonctionnement d'une station de charge (100, 200, 300, 400, 500) selon l'une quelconque des revendications 1 à 6 comprenant :
- la fourniture d'au moins un identifiant de point de charge attribué à un premier point de charge (102, 202, 302,402, 502) de la station de charge (100, 200, 300, 400, 500),
- l'émission d'un signal d'activation comprenant une instruction d'activation afin d'activer une application de charge installée sur le dispositif utilisateur mobile et
- l'émission par au moins un premier module d'émission de communication en champ proche (104, 204, 304, 310, 404, 504) de la station de charge (100, 200, 300, 400, 500) d'un premier signal d'identification comprenant le premier identifiant de point de charge.

9. Application de charge (536), en particulier une application de charge logicielle (536) destinée à l'installation sur un dispositif utilisateur mobile (530) comprenant :
- au moins un moyen de réception (540) configuré pour recevoir au moins un identifiant de point de charge d'un point de charge (102, 202, 302, 402, 502) d'une station de charge (100, 200, 300, 400, 500) par un module de réception en champ proche (532) du dispositif mobile (530) et
- au moins un moyen de traitement (538) configuré pour démarrer un processus d'authentification, sur la base de l'identifiant de point de charge reçu, dans laquelle l'application de charge est configurée pour une réception automatique d'une instruction d'activation d'un signal d'activation.
